# EUROPEAN PATENT APPLICATION

(11) **EP 0 961 465 A1**
(43) Date of publication of application: **01.12.1999**
(21) Application number: 98202618.9
(22) Date of filing: 04.08.1998
(51) Int. Cl.: H04M 1/72

(54) **System for connecting cellular telephones to a home telephone system**

(30) Priority: 29.05.1998 IT MI981194
(71) Applicant: BTICINO S.P.A., 20154 Milano (IT)
(72) Inventor: Santini, Ernesto, 28060 Sozzago (Novara) (IT)
(74) Representative: Zanardo, Giovanni

(57) **Abstract**

A system for connecting cellular telephones to a home telephone system, comprising a telephone support (10) for wall-mounting next to a walled-in box of a type used for installing an electrical power supply, a recharging base (20) to be mounted inside the mentioned telephone support (10) provided with clamps (30) connected to a feeding network or a low voltage circuit and clamps for connecting to the telephone line, and an adapter (40) suited to various models of cellular phones, to be inserted into the recharging base (20) and provided with a contoured seat (50) to allow to insert the base of various types of telephones. Through a telephone switchboard (15) the user may receive and make calls on the cellular network, by utilizing the cable-telephone sets of a home telephone system connected to the switchboard (15).

## Description

This invention refers to a system of connecting cellular telephones to a home telephone system.

The telephone systems of a traditional kind provide, alternatively, for a connection of one or more fixed or mobile telephones to a single telephone line or for a connection of a single cellular telephone by radio waves. Within the same room, the user may therefore have access to one or more telephone lines of a traditional kind, to which a portable set may possibly connect to receive the radio signal issued by a fixed switchboard and retransmit the same through the same switchboard; in the latter case, the controlling switchboard and the portable phone must in any case be kept inside the same room, at a distance such as to permit communicating within a limited and predetermined range.

On the other hand, the cellular telephones and cordless telephone sets can also be used outdoors, within a limited range (for instance, within a city environment) need to maintain the accumulator batteries contained in them at a certain charged-up level at all times. Under these circumstances, it may happen that within a home environment one or more traditional or cordless telephone sets, whether connected to a telephone switchboard or not, may be connected to one or more urban lines, while one or more cellular telephones may each operate independently and be connected to its own service network.

It the cellular telephone is, for example, mounted into a recharging support or at any rate in a position uncomfortable for the user within a home environment, a possible call to the mentioned cellular phone may be left without an answer, because the charge level reached by the battery is still too low, or more simply, because the user has not been successful in reaching the location of the telephone set in time to answer it.

At this time, some attempts have been made to overcome this drawback by arranging for the transmission of incoming messages, on the part of cellular telephones, to certain live voice systems exclusively destined for automotive uses. Such a solution is obviously still inadequate to satisfy most clients, as it requires owning a live-voice automotive-type cellular telephone adapter; moreover, the transferring of the call may be possible only inside the vehicle's passenger space equipped with the mentioned cellular telephone system.

Moreover, the subject development appears to still have a limited range and implies high component manufacturing and operating costs for the dedicated transfer line, which should be possibly reduced.

The scope of this invention is therefore to indicate a system for connecting cellular telephones to a home telephone system capable of overcoming the mentioned drawbacks or to produce a system for connecting cellular telephones to a telephone system of a reliable and suitable kind for use with any telephone model currently available on the market.

Another scope of this invention is to produce a system for connecting cellular telephones to a home telephone system, whose wiring harness is relatively simplified with respect to that of a traditional call transferring system.

A further scope of the invention is to indicate a system for connecting cellular telephones to a home telephone system capable of being used by means of walled-in boxes connecting to the feeding network in a modular manner, thus assuring the production of standard electrical components and telephone sets, whose manufacturing is substantially known.

A further scope of this invention is to indicate a system for connecting cellular telephones to a home telephone system which proves to be simple and economical to produce, utilizing relatively inexpensive raw materials and electrical and telephone components.

These scopes, according to this invention, are achieved by producing a system for connecting cellular telephones to a home telephone system according to claim 1, which is referred to for brevity.

In an advantageous manner, according to the invention, it is possible to connect a cellular telephone of any type, for instance "GSM", "ETACS", and "DECT", to a home telephone system by using an adapting accessory, connected to the feeding network, that houses the cellular telephone while at the same time allowing a recharge of the accumulator batteries.

Thanks to a telephone switchboard, the user may receive and make calls on the cellular network while using traditional telephone sets connected to the switchboard and tied-in to the same urban network.

In this case, the cellular telephone in practice allows to extend the number of the urban lines connected to a single switchboard.

Moreover, the connection between the mentioned adapting accessory for recharging the cellular telephone and the telephone switchboard can be established by a cable connection, radio or infrared waves, etc.

The characteristics and advantages of a system for connecting cellular telephones to a home telephone system according to this invention will appear more evident from the following description, relating to an exemplifying and not limiting embodiment and referred to the schematic accompanying drawings, in which:

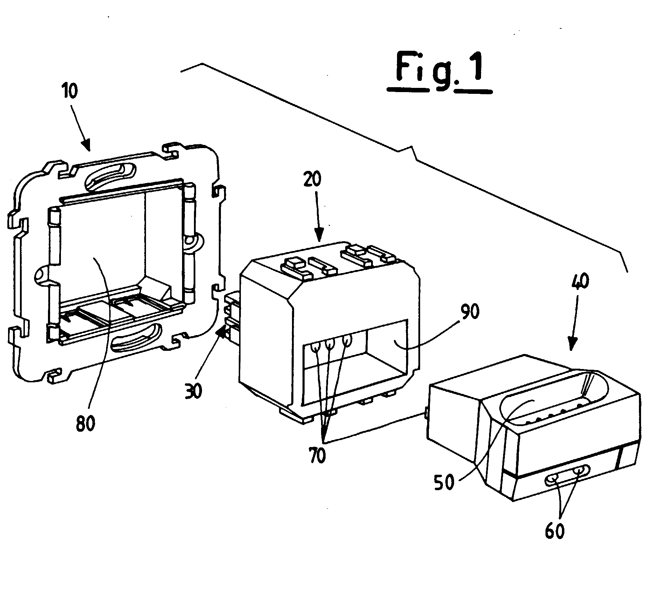

- Figure 1 is an exploded view of the main components of a system for connecting cellular telephones to a home telephone system, according to this invention;
- Figure 2 shows a schematic view of a first embodiment of a connection between an adapter for cellular telephones and an urban line, according to this invention;
- Figure 3 shows a schematic view of a second embodiment of a connection between an adapter for cellular telephones and a home telephone system, according to this invention;
- Figure 4 shows a schematic view of a third embodiment of a connection between an adapter for cellular telephones and a home telephone system, according to this invention.

With reference to the mentioned figures, 10 indicates a telephone support, constituted by a modular dial to be installed flush with the wall, 20 generally indicates a recharging element for the accumulator batteries of a portable telephone, in particular of a cellular telephone, which may be inserted inside the hollow socket 50 of an adapter 40, forming the plug-in section of the telephone base, which is contoured in a different manner depending on the chosen adapter 40, based on the various models of the external housing of the cellular telephones currently available on the market.

The adapter 40 usually also provides two little LED 60 diodes suitable for signaling the operating status of the adapter 40 itself, and the charge level attained by the accumulator batteries contained in the cellular telephone. In practice, the support 10 is affixed to the wall, next to a walled-in box of a type used for an electrical power supply or low voltage circuit, whose sockets are engaged by a number of connecting clamps 30 capable of transferring the signal to the recharging element 20 and from there to the adapter 40, thanks to further connections, generally indicated by 70, and telephone clamps.

The recharging element 20 is inserted with a snap-action inside the socket 80 of the support 10, while the adapter 40 is inserted into the socket 90 of the element 20, so as to respect the electrical connections 70.

The shape of the various elements composing the connecting system as an object of this invention is such that they may be easily removed and replaced with others serving the same function in case of a failure. In particular, the adapter 40 may be replaced by another similar device allowing it to plug-in a different type of cellular telephone in the socket 50.

In this case, the profile of the socket 50 will differ, depending on the chosen adapter 40, so as to accept the various contours in the base of each cellular telephone, which vary depending on the various types of portable telephone produced and made available on the market.

Moreover, each component of the connecting system according to the invention presents geometric characteristics of a modular type, in the sense that the telephone supports 10, the recharging bases 20 and the adapters 40 provide for measurements of a standard type and are suitable for mounting in walled-in boxes of a modular type.

By using an appropriately shaped adapter 40, it is possible to connect the telephone signal to the cellular phone, so that it the cellular phone is housed in its socket 50, in a recharging position of its accumulator batteries, any incoming call on the mentioned cellular phone may be transferred to the other home-type telephones available to the user.

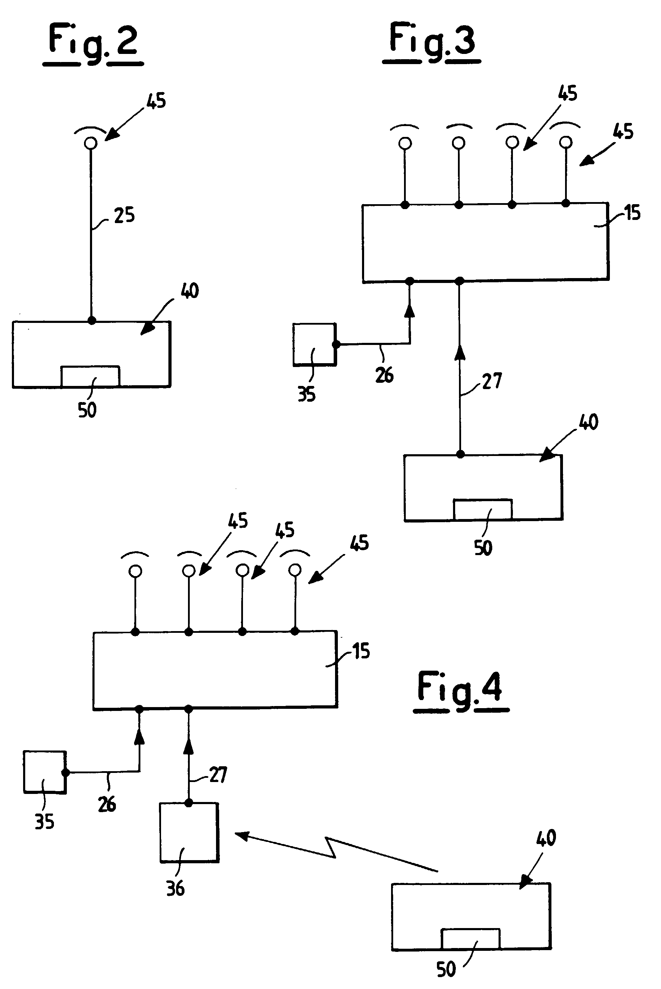

Should a call come in on the cellular phone and the latter be positioned in its recharging support but in a remote and/or uncomfortable position for the user, the connecting system according to the invention allows to transfer the calling signal to the other telephone sets connected to the home system, by using the outlet circuit of the adapter 40, which possesses electrical signaling features comparable to those of an urban telephone line, of the type illustrated in a simplified manner in the Figure 2 and generically indicated by the reference 25.

It is moreover possible to transfer the transmission call, starting from the cellular phone in a recharging position, to the other telephone sets of the home system, always thanks to the fact that the outlet electric circuit of the adapter 40 simulates the electrical behavior of a traditional urban telephone line.

In particular, as shown in a simplified manner in Figure 3, the system of connecting cellular telephones according to the invention may involve interconnecting a telephone switchboard 15 between a transmitter set 35 which provides a signal on a first urban telephone line 26 of a traditional kind, which makes it possible to place normal telephone calls with cable-type or portable sets, and the connection 45 to the home network and a second urban telephone line 27, which connects the adapter 40 with the switchboard 15; in practice, a cellular telephone connected to a connecting system according to the invention allows to extend the number off telephone lines connected to a single switchboard.

The calling signal on a cellular phone, both in a receiving and transmitting mode, rides on the urban telephone line 27 and may alternatively be handled by a receiver set 36, capable of capturing the commands of the adapter 40 transmitted by radio, infrared waves, etc.

Finally, it is possible to provide the usage of a further accessory, to be connected to the cellular phone and/or to the other sets connected to the home telephone system, so as to allow to communicate with a remote speaker even in a live voice manner.

The description given clearly outlines the characteristics as well as the advantages of the system of connecting cellular telephones to a home telephone system which is the object of this invention.

In particular, they cover the following aspects:
- the modularity and standardization of the components;
- the simplicity of installation and use;
- the possibility of connecting various models of cellular telephones to the supply network, simply by substituting an adapter component;
- the possibility of visually and quickly controlling the battery charging status and operability of the cellular telephone;
- the possibility of connecting the set telephone signal in a recharging position;
- the possibility of connecting a cellular telephone of any type to a home telephone system by using an adapting accessory for the cellular phone, which also permits recharging the battery;
- the possibility of receiving and making calls on the cellular network while utilizing the normal cable-type telephone sets connected to a switchboard;
- the possibility of extending the number of urban phone lines connected to a common telephone switchboard;
- the possibility of connecting the set telephone signal in a recharging position for utilizing it in live voice manner;
- the relatively limited cost of the components used with respect to those of traditional recharging systems, at an equal number of available auxiliary functions, based on the resulting advantages.

It is evident that numerous embodiments may be applied to the system of connecting cellular telephones to a home-type telephone system that is the object of this invention, without thereby abandoning the principles of novelty inherent in the inventive idea. It is equally evident that in the practical embodiment of the invention, the materials, shapes and dimensions of the details shown may be of any type depending on the requirements, and that the same may be substituted by others of a technically equivalent type. In particular, the charging device (20) may not be of a "walled-in", but off a "table-top" type.

## Claims

1. System for connecting cellular telephones to a home-type telephone system, characterized in that it comprises at least one charging device (20) for the accumulator batteries of a cellular telephone and at least one adapter (40) connected to said charging device (20) wherein said cellular phone can be mounted, said adapter (40) being provided with an outlet circuit having electrical signaling characteristics similar to those of an urban telephone line (25, 26, 27).

2. Connecting system according to claim 1, characterized in that it has a supporting element (10) constituted by a dial attached to a walled-in box provided with at least one socket (80) mounting said charging device (20).

3. Connecting system according to claim 1, characterized in that said charging device (20) holds a number off clamps (30) for connecting to a feed line, and some outlet clamps for connecting to a telephone system.

4. Connecting system according to claim 1 and 2, characterized in that said charging device (20) can be inserted into said socket (80) of said walled-in box with a snap action.

5. Connecting system according to claim 1, characterized in that said charging device (20) has at least one socket (90) capable of mounting said adapter (40), which provides for electrical connections (70) set opposite the connections (70) of said adapter (40).

6. Connecting system according to claim 1, characterized in that said adapter (40) comprises at least one socket (50) mounting the base of said cellular phone, said socket (50) having a contour and a number of electrical contacts or connectors of a different kind depending on the type of cellular telephone to be inserted.

7. Connecting system according to claim 6, characterized in that each adapter (40) presents a socket (50) contoured in a particular manner, where each of said contours corresponds to a particular type or model of cellular telephone currently available on the market.

8. Connecting system according to claim 1, characterized in that said adapter (40) provides for at least one visualizing device (60) to show the charging status of said battery.

9. Connecting system according to claim 1, characterized in that it comprises at least one component of a modular type.

10. Connecting system according to claim 1, 6 or 7, characterized in that said adapter (40) allows the transmission or reception of a telephone signal from said cellular phone mounted inside said socket (50) in a charging position for the accumulator batteries, where said telephone signal is transmitted to at least one cable-type or portable telephone set of said home-type system.

11. Connecting system according to claim 1, characterized in that said urban telephone line (26) is connected between a transmitting device (35) and at least one telephone switchboard (15) of a private telephone line (45).

12. Connecting system according to claim 1 and 11, characterized in that said telephone line (27) is connected between said adapter (40) and said telephone switchboard (15).

13. Connecting system according to claim 1 and 11, characterized in that said telephone line (27) is connected between a receiving device (36) and said telephone switchboard (15).

14. Connecting system according to claim 1 and 13, characterized in that said receiving device (36) receives a signal via radio or infrared waves from said adapter (40).

15. Connecting system according to claim 1, characterized in that it also comprises a further accessory designed to allow a live voice communication between said cellular telephone and at least one remote telephone.
